# EUROPEAN PATENT APPLICATION

(11) **EP 4 556 942 A1**
(43) Date of publication of application: **21.05.2025**
(21) Application number: 24209771.5
(22) Date of filing: 30.10.2024
(51) Int. Cl.: G01S 7/40, G01S 7/497, G01S 17/931

(54) **CLEANING CONTROL APPARATUS AND METHOD FOR VEHICLE**

(30) Priority: 15.11.2023 KR 20230158252
(71) Applicant: Hyundai Mobis Co., Ltd., Gangnam-gu Seoul 06141 (KR)
(72) Inventor: KANG, Jong Joo, 16891 Yongin-si, Gyeonggi-do (KR); CHOI, Won Hyok, 16891 Yongin-si, Gyeonggi-do (KR); KIM, Hyung Min, 16891 Yongin-si, Gyeonggi-do (KR)
(74) Representative: Jung, Minkyu

(57) **Abstract**

A cleaning control apparatus for vehicle according to one embodiment may include a driving environment determination logic unit configured to determine a traveling status or a driving environment of a vehicle and a sensor contamination determination logic unit configured to determine a contamination status outside an advanced driver assistance system (ADAS) sensor through the sensor.

## Description

### CROSS-REFERENCE TO RELATED APPLICATION

This application claims priority to and the benefit of Korean Patent Application No. 10-2023-0158252, filed on November 15, 2023, the disclosure of which is incorporated herein by reference in its entirety.

### BACKGROUND

### 1. Field of the Invention

One embodiment of the present invention relates to a cleaning control apparatus and method for vehicles, and specifically to an electronic cleaning control technology for an advanced driver assistance system (ADAS) sensor.

### 2. Discussion of Related Art

Cleaning solutions for vehicle parts are largely divided into mechanical (a liquid spray, an air blower, and the like), water-repellent materials (a lotus leaf surface structure, coating, and the like), and electronic (a voltage difference, piezoelectric element utilization, and the like) methods.

Among electronic cleaning technologies, an ultrasonic sound pressure/vibration method of utilizing a piezoelectric element has a problem of generating heat and consuming current when used for a long time.

A lot of research is being conducted to overcome the problem, but the reality is that there is no significant result.

### SUMMARY OF THE INVENTION

A cleaning control apparatus for vehicle according to one embodiment includes a driving environment determination logic unit configured to determine a traveling status or a driving environment of a vehicle and a sensor contamination determination logic unit configured to determine a contamination status outside an advanced driver assistance system (ADAS) sensor through the sensor.

The cleaning control apparatus according to one embodiment may further include a cleaning operation mode setting logic unit configured to set a cleaning operation mode according to the driving environment of the vehicle and the contamination status of the sensor.

The cleaning control apparatus according to one embodiment may further include a variable voltage signal generation unit configured to execute at least one of a voltage magnitude, a cycle, and an operation time set through the cleaning operation mode setting logic unit.

The cleaning control apparatus according to one embodiment may further include a vehicle internal communication unit configured to support communication between controllers in the vehicle.

The cleaning control apparatus according to one embodiment may further include a piezo and cover glass that is attached to a sensor cover and performs electronic cleaning.

A cleaning control method for vehicle according to one embodiment includes determining a traveling status or a driving environment of a vehicle and determining a contamination status outside an advanced driver assistance system (ADAS) sensor through the sensor.

The cleaning control method according to one embodiment may further include setting a cleaning operation mode according to the driving environment of the vehicle and the contamination status of the sensor.

The cleaning control method according to one embodiment may further include generating a variable voltage signal by executing at least one of a voltage magnitude, a cycle, and an operation time according to the setting of the cleaning operation mode.

The cleaning control method according to one embodiment may further include supporting communication between controllers in the vehicle.

The cleaning control method according to one embodiment may further include performing electronic cleaning.

### BRIEF DESCRIPTION OF THE DRAWINGS

FIG. 1 is a block diagram of a cleaning control apparatus for vehicle according to one embodiment.
FIG. 2 is a flowchart of a cleaning control method for vehicle according to one embodiment.
FIG. 3 is a diagram showing the difference in cleaning performance according to the magnitude and cycle of an input signal according to one embodiment.
FIG. 4 is a diagram showing autonomous driving mode electronic cleaning logic according to one embodiment.
FIG. 5 is a diagram showing self-driving mode electronic cleaning logic according to one embodiment.
FIG. 6 is a diagram showing control of differences in cleaning operating cycle and intensity depending on a mounting position of a sensor during an electronic cleaning operation according to one embodiment.
FIG. 7 is a diagram showing functional verification according to one embodiment.

### DETAILED DESCRIPTION OF EXEMPLARY EMBODIMENTS

Hereinafter, preferred embodiments of the present invention will be described in detail with reference to the accompanying drawings.

However, the technical idea of the present invention is not limited to some embodiments to be described but may be implemented in various different forms, and within the scope of the technical idea of the present invention, one or more among components in the embodiments may be used by being selectively combined and substituted.

Further, unless specifically defined and described, terms used in the embodiments of the present invention (including technical and scientific terms) may be interpreted as meanings which are generally understood by those skilled in the art to which the present invention pertains, and commonly used terms such as terms defined in the dictionary may be interpreted in consideration of the contextual meaning of the related art.

The terms used in the embodiments of the present invention are for the purpose of describing the embodiments only and are not intended to limit the invention.

In the present specification, the singular forms may include the plural forms unless the context clearly dictates otherwise, and when described as "at least one (or one or more) among A, B, and (or) C," it may include one or more of all possible combinations of A, B, and C.

In addition, in describing a component of embodiments of the present invention, terms such as first, second, A, B, (a), (b), etc. may be used.

These terms are only for distinguishing the component from other components, and the essence, sequence, or order of the component is not limited by the terms.

In addition, when a component is described as being "linked," "coupled," or "connected" to another component, the component is not only directly linked, coupled, or connected to another component, but also "linked," "coupled," or "connected" to another component with still another component disposed between the component and the other component.

Further, when a component is described as being formed or disposed "on (above) or under (below)" of another component, the term "on (above) or under (below)" includes not only when two components are in direct contact with each other, but also when one or more of other components are formed or disposed between the two components. Further, when a component is described as being "on (above) or below (under)," the description may include the meanings of an upward direction and a downward direction based on one component.

Hereinafter, embodiments will be described in detail with reference to the accompanying drawings, but identical or corresponding components are denoted by the same reference numerals regardless of figure numbers, and redundant descriptions thereof will be omitted.

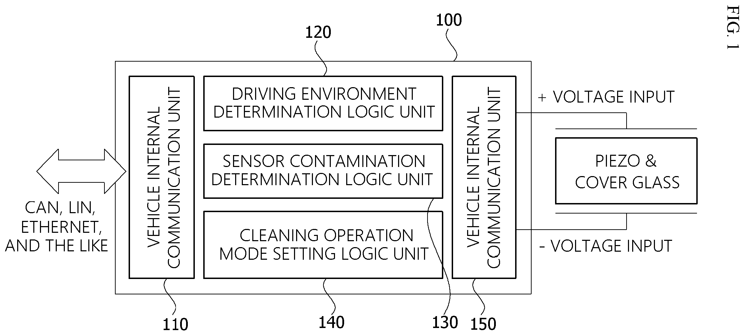

FIG. 1 is a block diagram of a cleaning control apparatus for vehicle according to one embodiment.

According to one embodiment, a cleaning control apparatus 100 for vehicles may include a vehicle internal communication unit 110 that supports communication between controllers in the vehicle, a driving environment determination logic unit 120 that determines a traveling status or a driving environment of a vehicle, a sensor contamination determination logic unit 130 that determines a contamination status outside an advanced driver assistance system (ADAS) sensor through the sensor, a cleaning operation mode setting logic unit 140 that sets a cleaning operation mode according to the driving environment of the vehicle and the contamination status of the sensor, and a variable voltage signal generation unit 150 that executes at least one of a voltage magnitude, a cycle, and an operation time set through the cleaning operation mode setting logic unit 140.

The cleaning control apparatus for vehicles may include at least some of an element, a vehicle, a circuit, a processor, a semiconductor, vehicle machine, vehicle equipment/parts, a computing device, a memory, a data transceiver, and the like. At least some of components of the cleaning control apparatus for vehicles may be physically/communicatively/mechanically/electrically connected to each other, respectively. At least some of the operations performed by the cleaning control apparatus for vehicles may be performed by at least some of the components of the cleaning control apparatus for vehicles.

The cleaning control apparatus for vehicles may provide electronic cleaning control technology for the ADAS sensor or the like, which are parts of the vehicle. The cleaning control apparatus for vehicles may be mounted or installed on the vehicle or a part of the vehicle. The cleaning control apparatus for vehicles may control cleaning (function) using at least a portion of the cleaning control apparatus for vehicles. The cleaning control apparatus for vehicles may control a cleaning operation/function of at least a portion of the cleaning control apparatus for vehicles. The cleaning control apparatus for vehicles may control a cleaning operation/function of at least a portion connected to the cleaning control apparatus for vehicles.

According to one embodiment, the cleaning control apparatus may further include a piezo and a cover glass (piezo & cover glass) that are attached to a sensor cover and perform electronic cleaning.

The cleaning control apparatus for vehicles may provide an electronic cleaning technology/function utilizing a piezoelectric element of the vehicle.

The vehicle internal communication unit 110 may include modules (supporting CAN, LIN, Ethernet, and the like) that support communication between controllers in the vehicle. The vehicle internal communication unit 110 may include a vehicle internal communication device or the like mounted inside the vehicle.

The driving environment determination logic unit 120 may provide a function that determines the traveling status and the driving environment of the vehicle by utilizing/using information obtained from sensors or controllers such as a navigation system, a rain sensor, and steering/braking controllers, and the like. The driving environment determination logic unit 120 may include/use driving environment determination logic.

The sensor contamination determination logic unit 130 may provide a function that determines whether the outside of a vehicle sensor such as an ADAS sensor is contaminated through/using the sensor. The sensor contamination determination logic unit 130 may include/use sensor contamination determination logic.

The cleaning operation mode setting logic unit 140 may provide a function that sets an efficient operation mode according to the vehicle driving environment and the contamination status of the sensor. The cleaning operation mode setting logic unit 140 may include/use cleaning operation mode setting logic. The cleaning operation mode setting logic unit 140 may provide a function that sets an efficient operation mode according to the vehicle driving environment and a degree/level of sensor contamination.

The variable voltage signal generation unit 150 may provide a function that executes a set/preset voltage magnitude, cycle, operation time, or the like (e.g., a function that generates a variable voltage signal (e.g., an input signal/voltage) by being executed/performed/operated based on the voltage magnitude, cycle, operation time, or the like (of the input signal)), through/using the cleaning operation mode setting logic unit. The variable voltage signal generation unit 150 may include a variable voltage signal generator. At least a portion of the variable voltage signal generation unit 150 may output/generate +voltage/-voltage as an input signal. The input signal may be transmitted to at least a portion of a piezo and cover glass (piezo & cover glass). At least a portion (e.g., a piezo) of the piezo and cover glass (piezo & cover glass) may contract or expand depending on the transmitted/received input signal (e.g., the input voltage/100 V to 180 V). In some cases, +voltage/-voltage may be input to at least a portion of the variable voltage signal generation unit 150.

The piezo and cover glass (piezo & cover glass) may be attached to a cover/case of the sensor to provide the operation of an electronic cleaning (ultrasonic sound pressure, ultrasonic vibration, or the like) function. The piezo and cover glass may include a piezoelectric element, a cover glass, and the like.

For the ultrasonic sound pressure method, it is possible to provide a technology for removing foreign substances on/close to parts of the vehicle, such as sensors, by flowing/transmitting/delivering ultrasonic signals on a cover surface may be provided.

For the ultrasonic vibration method, it is possible to provide a technology for removing foreign substances on/close to parts of the vehicle by vibrating the cover through/using/by transmitting piezo vibration.

The cleaning control apparatus for vehicles has the advantage of minimizing damage to a vehicle design and increasing a degree of freedom of package installation in the vehicle by providing electronic cleaning technology. The cleaning control apparatus for vehicles may provide control logic in conjunction with various sensors/controllers in the vehicle to be applied to the vehicle system.

The cleaning control apparatus for vehicles may provide a cleaning solution for cameras, LiDARs, and the like to prevent the deterioration of ADAS sensor performance in bad environments (snow, rain, or the like).

The cleaning control apparatus for vehicles has the advantage of implementing control logic without increasing costs by utilizing sensors/controllers in the vehicle to compensate for the shortcomings that arise when the vehicle utilizes electronic cleaning technology to secure ADAS sensor performance when traveling in bad environments.

The cleaning control apparatus for vehicles has the effect of securing the performance of ADAS sensors (LiDAR, cameras) and the like in bad environments (snow, rain, or the like) through the application of efficient electronic cleaning technology.

The cleaning control apparatus for vehicles may provide ADAS sensor electronic cleaning technology, and may be configured as a type that is directly mounted on a front surface of the sensor as a cover glass mounting type, or a type that is linked to a separate controller. Major applied ADAS sensors may be considered LiDARs, front/back/SVM cameras, and the like to which mechanical (wipers, washer) cleaning technology is difficult to apply.

According to one embodiment, when the cleaning control apparatus for vehicles is mounted on a LiDAR, or the like, verification may be possible with a cover glass type to which the cleaning technology is applied. The cleaning control apparatus for vehicles may include a cover glass to which electrowetting and ultrasonic sound pressure technology is applied. The cleaning control apparatus for vehicles may be equipped with or include a piezo for an electrowetting pattern and ultrasonic sound pressure. The cleaning control apparatus for vehicles may include a flexible printed circuit board (FPCB) for input signals. The piezo and the FPCB may be disposed close to each other.

The cleaning control apparatus for vehicles may provide above functions by adding/including a circuit for cleaning on a board (e.g., a LiDAR board) of a part of the vehicle, such as a LiDAR. The cleaning control apparatus for vehicles may include at least some of a two-axis scanning mirror, a lens, an MLA (transmitter/receiver), a signal processing unit, and the like, or may be disposed at a position close to at least some thereof. At least some of the two-axis scanning mirror, the lens, the MLA (transmitter/receiver), the signal processing unit, and the like may be disposed close to each other.

When the cleaning control apparatus for vehicles is applied to vehicle parts such as a camera with a small package size, a separate controller type may be considered, and verification may be performed considering a circuit configuration for cleaning in a separate controller. Verification may be performed by extending a cable to the cover glass, and additional specifications of the front and rear recognition cameras of the vehicle may also be reflected.

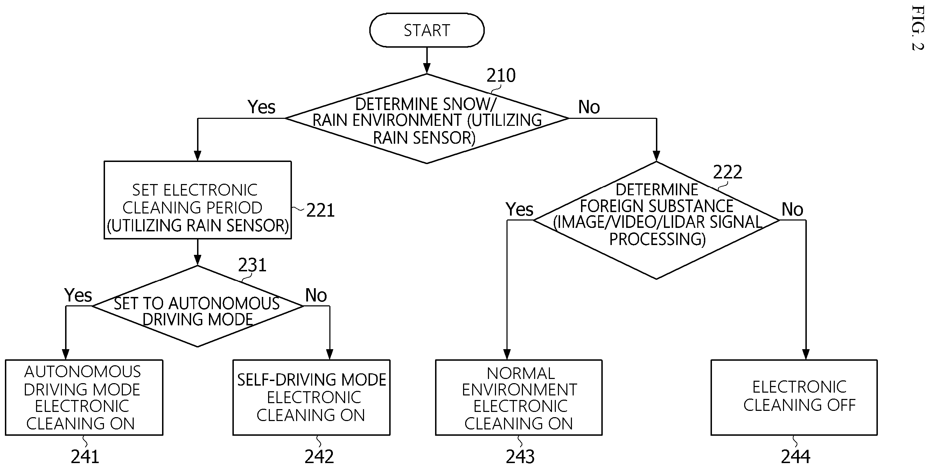

FIG. 2 is a flowchart of a cleaning control method for vehicles according to one embodiment.

Each operation of the cleaning control method for vehicles may be performed by at least some of the components of the cleaning control apparatus for vehicles described above or below.

In operation 210, the cleaning control apparatus for vehicles may determine a traveling status or a driving environment of a vehicle. The cleaning control apparatus for vehicles may determine an (surrounding) environment (e.g., weather) of a location where the vehicle is traveling/placed/located, such as snow/rain by utilizing/using a sensor capable of determining the weather, such as a rain sensor.

In operation 222, depending on the traveling status or the driving environment of the vehicle, when cleaning is not required/it is determined that cleaning is not required (e.g., clear/cloudy weather without snow/rain), the cleaning control apparatus for vehicles may determine a contamination status outside/around a part/sensor of the vehicle, such as an advanced driver assistance system sensor (ADAS), (by processing an image/video/LiDAR signal) through/using the part/sensor (it is possible to determine whether there are foreign substances/contaminants from an image/video/signal acquired through/using the part/sensor of the vehicle).

In operation 221 or operation 231, depending on the traveling status or the driving environment of the vehicle, when cleaning is required/it is determined that cleaning is required (e.g., snow/rain weather), the cleaning control apparatus for vehicles may set/determine the cleaning operation mode depending on the driving environment of the vehicle and the contamination status of the sensor. The cleaning operation mode may include an autonomous driving mode and a self-driving mode. The cleaning control apparatus for vehicles may set an electronic cleaning cycle by utilizing/using/based on a part/sensor (e.g., a rain sensor) capable of sensing the surrounding environment of the vehicle, or based on information acquired from the part/sensor of the vehicle.

The cleaning control apparatus for vehicles may generate a variable voltage signal by executing/based on at least one of a voltage magnitude, a cycle, and an operation time (depending on the setting of the cleaning operation mode). The voltage magnitude may be the magnitude of a voltage of the input signal, the cycle may be a voltage cycle of the input signal or a cleaning cycle, and the operation time may be an operation time of the input signal or a cleaning operation time.

According to one embodiment, the cleaning control apparatus for vehicles may support communication between controllers in the vehicle.

According to one embodiment, in operation 241, operation 242, or operation 243, the cleaning control apparatus for vehicles may perform electronic cleaning.

In operation 241, the cleaning control apparatus for vehicles may perform electronic cleaning for the autonomous driving mode when the cleaning control apparatus for vehicles is set or determined to be in the autonomous driving mode. The autonomous driving mode may include a mode in which the vehicle performs autonomous driving.

In operation 242, the cleaning control apparatus for vehicles may perform electronic cleaning for the self-driving mode when the cleaning control apparatus for vehicles is set or determined to be in the self-driving mode. The self-driving mode may include a mode in which a driver of the vehicle directly (by himself or herself) drives the vehicle.

In operation 243, when it is determined that there are foreign substances or contaminants around/outside the part of the vehicle (when the surrounding environment is set or determined to be a normal environment), the cleaning control apparatus for vehicles may perform electronic cleaning for the normal environment.

In operation 244, when it is determined that there are no foreign substances or contaminants around/outside the part of the vehicle (when the surrounding environment is not set or determined to be the normal environment), the cleaning control apparatus for vehicles may not perform electronic cleaning (may control the electronic cleaning function to be turned off).

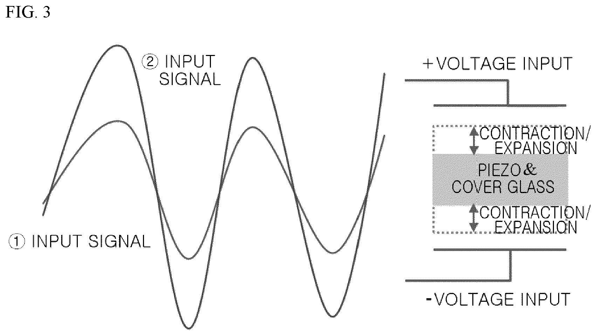

FIG. 3 is a diagram showing the difference in cleaning performance according to the magnitude and cycle of an input signal according to one embodiment.

Referring to FIG. 3, the cleaning control apparatus for vehicles may allow the operation of electronic cleaning technology utilizing a piezo (piezoelectric element) to vibrate the cover glass through contraction/expansion of the piezo according to the input voltage/signal, or provide a technology to remove foreign substances from the cover glass by sending the signal to the surface of the part of the vehicle (a surrounding object), and shows the difference in cleaning performance depending on the magnitude and cycle of the input signal, as shown in ① and ② in FIG. 3.

At least a portion (e.g., piezo)/end, or the like of the piezo and cover glass (piezo & cover glass) may be contracted/expanded/extended.

The cleaning control apparatus for vehicles may provide efficient control logic when related electronic cleaning technology is applied in that heat generation and current consumption increase when electronic cleaning technology is utilized for a long time.

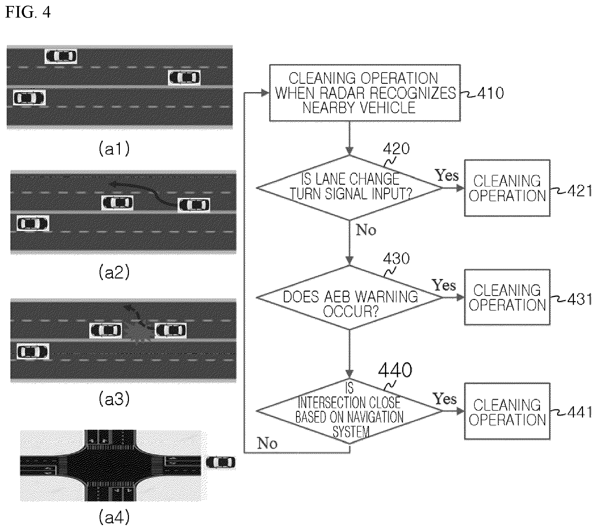

FIG. 4 is a diagram showing autonomous driving mode electronic cleaning logic according to one embodiment.

Referring to FIG. 4, the electronic cleaning operation logic when the driver sets the cleaning operation mode to the autonomous driving mode or sets smart cruise to "On" in an environment where it rains/snows continuously may be defined as the "autonomous driving mode electronic cleaning logic," and the operation is as shown in the flowchart on the right.

Referring to the driving situation in (a1) of FIG. 4, the cleaning control apparatus for vehicles may perform the cleaning operation during autonomous driving without changing lanes by making a determination based on a radar sensor of the vehicle.

Referring to the driving situation in (a2) of FIG. 4, the cleaning control apparatus for vehicles may perform the cleaning operation when the vehicle changes lanes in autonomous driving by making a determination based on a turn signal operation of the vehicle.

Referring to the driving situation in (a3) of FIG. 4, the cleaning control apparatus for vehicles may perform the cleaning operation upon warning of an accident risk by making a determination based on an automated emergency braking (AEB) operation of the vehicle.

Referring to the driving situation in (a4) of FIG. 4, the cleaning control apparatus for vehicles may perform the cleaning operation when the vehicle gets close to/approaches an intersection by making a determination based on information acquired from the navigation system of the vehicle.

In operation 410, the cleaning control apparatus for vehicles may perform the cleaning operation when the radar recognizes a nearby vehicle.

In operation 420, the cleaning control apparatus for vehicles may check whether a lane change turn signal is input.

In operation 421, the cleaning control apparatus for vehicles may perform cleaning (operation) when the lane change turn signal is input.

In operation 430, the cleaning control apparatus for vehicles may check whether an AEB warning occurs when the lane change turn signal is not input.

In operation 431, the cleaning control apparatus for vehicles may perform cleaning (operation) when the AEB warning occurs.

In operation 440, the cleaning control apparatus for vehicles may check whether the intersection is close based on the navigation system when the AEB warning does not occur.

In operation 441, the cleaning control apparatus for vehicles may perform cleaning (operation) when the vehicle gets close to/approaches the intersection based on the navigation system or based on/using information acquired from the navigation system.

The cleaning control apparatus for vehicles may perform operation 410 again when the vehicle does not get close to/approaches the intersection based on the navigation system or based on/using information acquired from the navigation system.

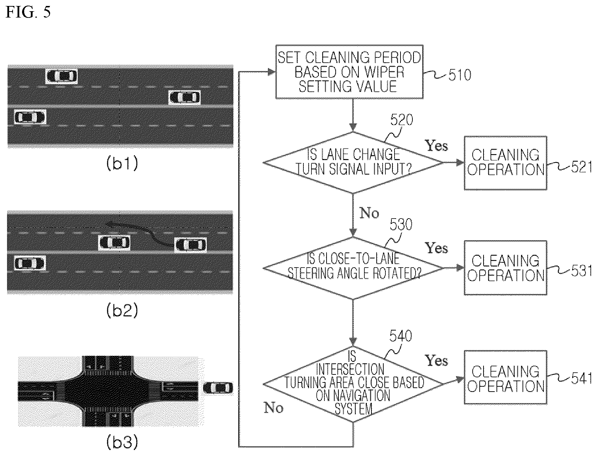

FIG. 5 is a diagram showing self-driving mode electronic cleaning logic according to one embodiment.

Referring to FIG. 5, when the driver directly drives in an environment where it rains/snows continuously, the electronic cleaning operation logic may be defined as the "self-driving mode electronic cleaning logic", and the operation is as shown in the flowchart on the right.

Referring to the driving situation in (b1) of FIG. 5, the cleaning control apparatus for vehicles may perform the cleaning operation based on a wiper cleaning setting value when the vehicle is traveling without changing lanes.

Referring to the driving situation in (b2) of FIG. 5, the cleaning control apparatus for vehicles may perform the cleaning operation depending on whether there is a turn signal operation when the vehicle changes lanes. The cleaning control apparatus for vehicles may perform the cleaning operation depending on the proximity to a lane based on a steering angle.

Referring to the driving situation in (b3) of FIG. 5, the cleaning control apparatus for vehicles may perform the cleaning operation when the vehicle approaches an intersection turn point based on information acquired from the navigation system.

In operation 510, the cleaning control apparatus for vehicles may set a cleaning cycle based on a wiper setting value.

In operation 520, the cleaning control apparatus for vehicles may check whether a lane change turn signal is input.

In operation 521, the cleaning control apparatus for vehicles may perform cleaning (operation) when the lane change turn signal is input.

In operation 530, the cleaning control apparatus for vehicles may check whether a steering angle rotation is close to a lane when the lane change turn signal is not input.

In operation 531, the cleaning control apparatus for vehicles may perform cleaning (operation) when a steering angle rotation close to a lane occurs.

In operation 540, the cleaning control apparatus for vehicles may check whether an intersection turning area is close based on the navigation system when the steering angle rotation close to a lane does not occur.

In operation 541, the cleaning control apparatus for vehicles may perform cleaning (operation) when the vehicle gets close to/approaches the intersection turning area based on the navigation system or based on/using information acquired from the navigation system.

The cleaning control apparatus for vehicles may perform operation 510 again when the vehicle does not get close to/approach the intersection turning area based on the navigation system or based on/using information acquired from the navigation system.

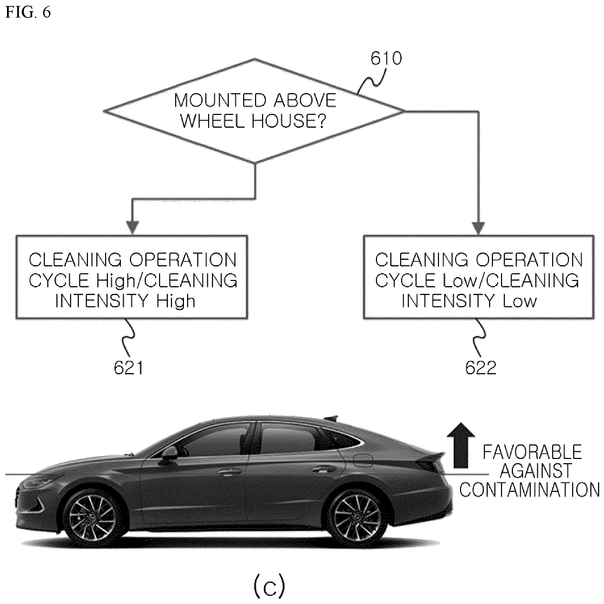

FIG. 6 is a diagram showing control of differences in cleaning operating cycle and intensity depending on a mounting position of a sensor during an electronic cleaning operation according to one embodiment.

Referring to (c) of FIG. 6, the cleaning control apparatus for vehicles may control differences in the cleaning operating cycle and intensity depending on the mounting position of the sensor during the electronic cleaning operation. As a result of testing on a wet, unpaved road under the vehicle, it can be seen that parts of the vehicle (e.g., the ADAS sensors) mounted in regions higher than the height of a wheel house of the vehicle are relatively less likely to be contaminated. The cleaning control apparatus for vehicles may perform control (on cleaning) by providing/making differences in the cycle and intensity of the cleaning operation depending on an attachment environment of the ADAS sensor.

In operation 610, the cleaning control apparatus for vehicles may check whether a part of the vehicle has been mounted above the wheel house/a designated portion of the vehicle.

In operation 621, when the part of the vehicle has not been mounted above the wheel house/the designated portion of the vehicle, the cleaning control apparatus for vehicles may set or change/operate a cleaning operating cycle to be high or to increase the number of cleaning operations, or the cleaning intensity to be high.

In operation 622, when the part of the vehicle has been mounted above the wheel house/the designated portion of the vehicle, the cleaning control apparatus for vehicles may set or change/operate a cleaning operation cycle to be low or to reduce the number of cleaning operations, or the cleaning intensity to be low.

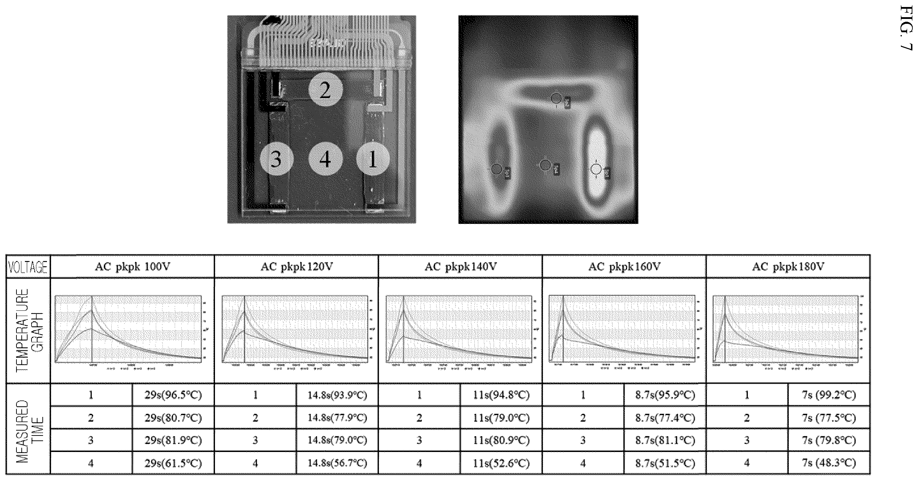

FIG. 7 is a diagram showing functional verification according to one embodiment.

Referring to FIG. 7, the functional verification and heat generation performance of the cleaning control apparatus for vehicles can be seen.

The cleaning control apparatus for vehicles ensures cleaning performance at all of AC peak-to-peak (pk-pk) 100 V or higher (100 V to 180 V), but since heat generation may occur depending on the input voltage, heat generation may be minimized by setting an appropriate input voltage according to functional verification results.

Referring to the image and graph/diagram in FIG. 7, when the heat generation of the element is measured and a measurement point is checked after power to the cleaning control apparatus for vehicles is applied, a power application method in operation Test-1 is the same, and it can be seen that a heat generation rate increases in proportion to the voltage.

The cleaning control apparatus for vehicles may set the applied voltage based on a preset time for a preset heating temperature.

The cleaning control apparatus for vehicles may perform electronic cleaning for cleaning operations, and may include or perform at least some of a voltage difference/piezoelectric element utilization method, electronic self-cleaning technology, an electrowetting method, an ultrasonic surface cleaning/ultrasonic sound pressure method, a piezo-wipe/ultrasonic vibration method, ultrasonic haptic technology, and the like.

The term "~unit" used in the present embodiment refers to software components or hardware components such as a field-programmable gate array (FPGA) or an application specific integrated circuit (ASIC), and the "~unit" performs certain functions. However, the "~unit" is not limited to software or hardware. The "~unit" may be configured to reside in an addressable storage medium, or may be configured to reproduce one or more processors. Therefore, for example, "~unit" includes components such as software components, object-oriented software components, class components, and task components, and includes processes, functions, attributes, procedures, sub-routines, segments of program code, drivers, firmware, micro code, circuits, data, a database, data structures, tables, arrays, and variables. Functions provided in the components and the "~unit" may be coupled with lesser numbers of components and "units," or may be further divided into additional components and "~units." Furthermore, the components and "∼units" may be implemented to reproduce one or more CPUs in a device or a security multimedia card.

Although the preferred embodiments of the present invention have been described above, it is understood that those skilled in the art can make various changes and modifications to the present invention without departing from the spirit and scope of the present invention set forth in the claims below.

## Claims

1. A cleaning control apparatus for a vehicle, the apparatus comprising:
a driving environment determination logic unit configured to determine a traveling status or a driving environment of the vehicle; and
a sensor contamination determination logic unit configured to determine a contamination status outside an advanced driver assistance system (ADAS) sensor through the ADAS sensor.

2. The cleaning control apparatus of claim 1, further including a cleaning operation mode setting logic unit operatively connected to the driving environment determination logic unit and the sensor contamination determination logic unit and configured to set a cleaning operation mode according to the driving environment of the vehicle and the contamination status of the ADAS sensor.

3. The cleaning control apparatus of claim 2, further including a variable voltage signal generation unit operatively connected to the driving environment determination logic unit and the sensor contamination determination logic unit and configured to operate by at least one of a voltage magnitude, a cycle, and an operation time set through the cleaning operation mode setting logic unit.

4. The cleaning control apparatus of claim 3, further including:
a piezo,
wherein the piezo is electrically connected to the variable voltage signal generation unit and performs electronic cleaning according to voltage input from the variable voltage signal generation unit, according to the determining of the traveling status or the driving environment and the contamination status.

5. The cleaning control apparatus of any one of claims 1 to 4, further including a vehicle internal communication unit configured to support communication between controllers in the vehicle.

6. The cleaning control apparatus of any one of claims 1 to 5, further including a piezo and cover glass that is attached to a sensor cover and performs electronic cleaning.

7. The cleaning control apparatus of claim 2, further including:
a variable voltage signal generation unit operatively connected to the driving environment determination logic unit, the sensor contamination determination logic unit, and the cleaning operation mode setting logic unit; and
a piezo electrically connected to the variable voltage signal generation unit,
wherein the variable voltage signal generation unit generates a variable voltage signal by operating by at least one of a voltage magnitude, a cycle, and an operation time according to the setting of the cleaning operation mode, in response that cleaning is required based on the traveling status or the driving environment of the vehicle, and transmits the variable voltage signal to the piezo.

8. The cleaning control apparatus of any one of claims 1 to 7, wherein the cleaning control apparatus is configured for performing electronic cleaning, in response that cleaning is not required based on the traveling status or the driving environment of the vehicle and in response that a foreign substance is detected based on the contamination status.

9. A cleaning control method for a vehicle, the method comprising:
determining a traveling status or a driving environment of the vehicle; and
determining a contamination status outside an advanced driver assistance system (ADAS) sensor through the ADAS sensor.

10. The cleaning control method of claim 9, further including setting a cleaning operation mode according to the traveling status of the vehicle, the driving environment of the vehicle, or the contamination status.

11. The cleaning control method of claim 10, further including generating a variable voltage signal by operating by at least one of a voltage magnitude, a cycle, and an operation time according to the setting of the cleaning operation mode.

12. The cleaning control method of claim 11, further including performing electronic cleaning by a piezo according to the variable voltage signal.

13. The cleaning control method of any one of claims 9 to 12, further including supporting communication between controllers in the vehicle.

14. The cleaning control method of any one of claims 9 to 13, further including performing electronic cleaning.

15. The cleaning control method of claim 9, further including:
generating a variable voltage signal by operating by at least one of a voltage magnitude, a cycle, and an operation time according to setting of cleaning operation mode, in response that cleaning is required based on the traveling status or the driving environment of the vehicle; and
performing electronic cleaning, in response that cleaning is not required based on the traveling status or the driving environment of the vehicle and in response that a foreign substance is detected based on the contamination status.
